# EUROPEAN PATENT SPECIFICATION

(11) **EP 1 565 084 B1**
(45) Date of publication and mention of the grant of the patent: **17.09.2008**
(21) Application number: 03780653.6
(22) Date of filing: 25.11.2003
(51) Int. Cl.: A43B 21/26, A43B 13/18, B29D 31/515

(54) **METHOD FOR THE PRODUCTION OF A SHOCK ABSORBING HEEL FOR FOOTWEAR AND THE HEEL PRODUCED THEREBY**
VERFAHREN ZUR HERSTELLUNG EINES STOSSDÄMPFENDEN ABSATZES UND STOSSDÄMPFENDER ABSATZ
PROCEDE DE PRODUCTION DE TALON AMORTISSEUR POUR ARTICLES CHAUSSANTS ET TALON AINSI PRODUIT

(30) Priority: 27.11.2002 IT FI20020230
(43) Date of publication of application: 24.08.2005
(73) Proprietor: Salvatore Ferragamo Italia S.P.A., 50123 Firenze (IT)
(72) Inventor: SUAREZ, Adolfo, Javier, New York, NY 10069 (US); PUCCIONI, Antonio, I-57022 Castagneto Carducci (IT); PEZZUOLO, Simone, I-30030 Tombelle di Vigonovo (IT)
(74) Representative: Bardini, Marco Luigi
(86) International application number: PCT/IT2003/000775
(87) International publication number: WO 2004/047580

(56) References cited:
- DE-B- 1 168 067
- FR-A- 1 394 958
- FR-A- 2 577 119
- GB-A- 542 193
- US-A- 1 633 324
- US-A- 1 711 302
- US-A- 5 079 856

## Description

### Field of the invention

The present invention relates generally to the field of footwear and, more particularly, relates to a shock-absorbing heel for footwear and a method for producing it.

### Background of the Invention

Several expedients are known for absorbing and dampening the stresses that are transmitted to the skeleton and muscle structure by means of the foot in the course of normal walking, and even more so on doing sporting activities (running, jumping, etc.). In particular, there are known solutions that envisage forming chambers in the sole of the footwear and arranging appropriate elastic means or air cushions inside them. In other solutions the absorption of shocks and stresses is entrusted to fluid cushions within the sole, thus realizing even a circulation of air in the sole that will be produced by the shocks and the walking movement of the foot itself, especially between the fore part of the sole and its rear part, and possibly also between the outside, passing through vents and non-return valves

Expedients of this kind have so far been applied to footwear of the sporting type or, in any case, equipped with rubber soles, or soles made of plastic material, obtained, for example, by means of injection moulding.

Apart from the sure benefit one obtains when such solutions are adopted in sporting footwear, there can be no doubt that they can make a significant contribution to the comfort of any kind of footwear used for everyday activities. However, there are both aesthetic and constructional reasons why shoes with soles made of leather, or similar material, which constitute a substantial fraction of the commonly employed footwear, cannot be provided with such expedients capable of damping the stresses.

A method for manufacturing a heel according to some of the features of claim 8 is disclosed in FR1394958.

### Object and Summary of the invention

The object of the present invention is to provide a footwear heel suitable for soles made of leather or similar material and having dampening properties capable of limiting transmission to the skeleton and muscle structure of the stresses that are generated during walking. Another object of the present invention is to provide a method of producing shock-absorbing heels of the aforementioned type suitable for application in industry and in mass production.

These aims are attained by means of the shock-absorbing heel for footwear according to the present invention and the relevant method for its production having the characteristics set out in claims 1 and 8 attached hereto.

### Brief description of the drawings

Further characteristics and advantages of the shock-absorbing heel and the method for its production will be apparent from the following description of an embodiment thereof, which is given purely by way of example and is not to be considered limitative in any way, the description making reference to the attached drawings, of which:

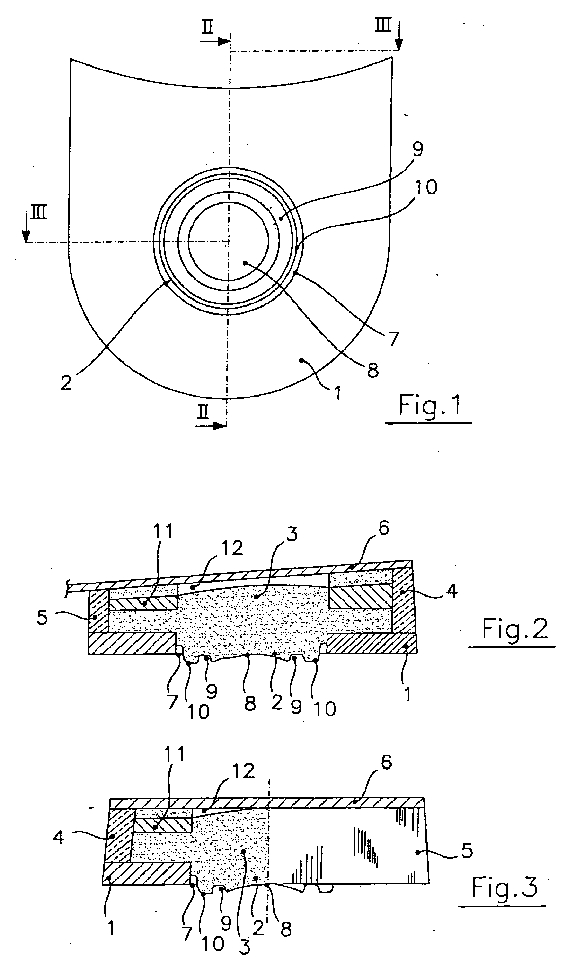

- Figure 1 shows a bottom plan view of a heel for footwear in accordance with the present invention; ahock-bbsorbing heel according to the preamble of CLAIM 1 is disclosed in GB 542193 A.
- Figure 2 shows a sectional view taken along line II-II of Figure 1;
- Figure 3 shows a partial sectional view taken along lines III-III of Figure 1; and

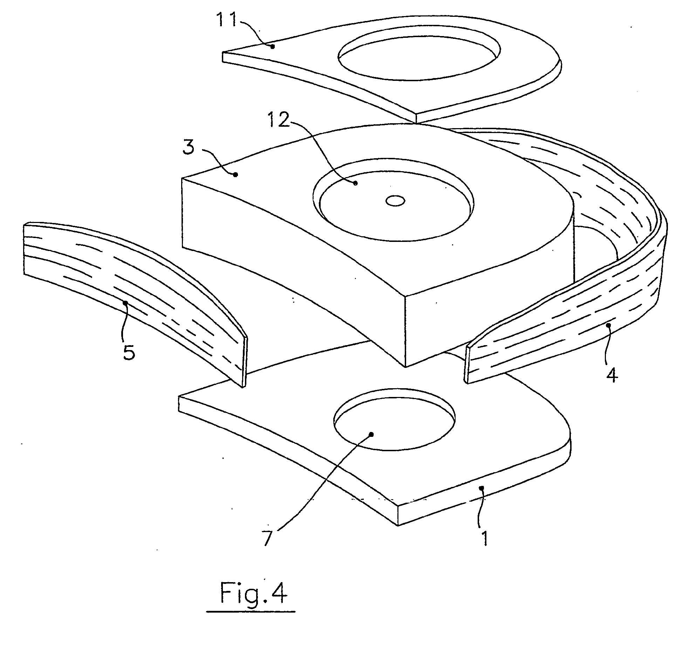

- Figure 4 shows an exploded view of the heel in accordance with the invention.

### Detailed description of the Invention

Referring to the aforesaid figures, the shock-absorbing heel in accordance with the invention comprises an underheel 1 made of rubber or some elastomeric material capable of resisting wear, with a circular window 7 provied at its centre, from which there projects for a few millimetres an appendix 2 of a core 3 made of resilient plastic material, polyurethane for example. Core 3 is enclosed between two thick strips of leather, one of which, indicated by the reference number 4, is arcuate in shape such as to line both the rear and the sides of the heel, while the other, indicated by 5, lines the front side of the heel.

Advantageously, the projecting appendix 2 of core 3 will be shaped so as to perform its shock-absorbing function in an optimal manner. In particular, it is formed with a central depression 8 delimited by a first circular groove 9 that, in its turn, is delimited by a circular fin 10, constituting the outer edge of the appendix 2 and placed at some distance from the wall delimiting window 7 of the rubber underheel 1.

Advantageously, an insert 11 of light plastic material, polystyrene for example, may be provided in core 3 to permit the application of the sole (a visible part of which has been indicated by the reference number 6) by means of nailing. Otherwise, the sole may in any case be. applied by means of gluing.

With a view to facilitating the movement of appendix 2 in the direction orthogonal to the walking plane, between sole 6 and core 3 there may be provided a chamber 12 forming an air cushion that, by means of its compression and dilation, will likewise assist in absorbing the stresses acting on the foot. In that case insert 11 will have to be provided with a central opening to establish continuity between appendix 2 of core 3 and the air contained in chamber 12.

With a view to producing the shock-absorbing heel in accordance with the present invention, one first prepares by means of moulding, or some other suitable process, a rubber underheel 1 provided with at least one opening, a central window 7 for example, as shown in the figures. The underheel 1 is then arranged within a mould for injection moulding having a shape equal to that of the underheel and a height substantially equal to the height of the heel that is to be produced. The mould is shaped in such a way as to have a lowered bottom in the position of the opening provided in the underheel to permit the formation of the projecting appendix 7. In the space delimited by the two leather strips 4 and 5 above the underheel 1 there may also be arranged a connection insert 11 and then, after closing the mould, thermoplastic or elastomer resin, polyurethane for example, is injected to form an internal resilient core provided with an appendix 2 arranged in the opening 7 and partially projecting therefrom. On solidifying, the resin becomes secured to the underheel and the two strips, thus forming a single body.

It is preferable to shape the lid of the mould in such a manner as to create a chamber 12 in the upper part of the heel in a position opposite the opening 7, which, once the sole 6 has been applied, will come to contain an air cushion that improves the shock-absorbing function of resilient core 3, facilitating movements of appendix 2 in the direction at right angles to the plane of walking.

The heel formed in this manner can be fixed to the sole by means of known systems, for example, by means of nailing if the insert 11 is present or by means of gluing. The exterior appearance of the heel produced in this manner will be the classical one of a leather heel, but provided with the shock-absorbing function. It is to be understood that, even though the present description has been made with reference to the case of heels made of leather and the use of strips 4 and 5 consisting of this material, the invention is applicable in exactly the same manner also to heels realized with some material that is visually similar to leather, for example, heels made of masonite or regenerated leather. In that case, obviously, the employed strips 4 and 5 will be made of these materials.

Though the present description makes reference to a single window provided in the underheel, it is obvious that the underheel may be provided with several windows, preferably arranged symmetrically, from each of which there will project an appendix 2 of the internal elastic core. Similarly, the shape of the openings provided in the underheel may be different from the circular shape here illustrated. The various parts making up the heel in accordance with the invention are kept together by the adhesive action developed by the resin at the moment of injection and its subsequent solidification.

## Claims

1. A shock-absorbing heel for footwear comprising an underheel (1) with at least one opening (7), **characterised in that** the underheel (1) is made of elastomeric material and strips (4, 5) made of leather or some material visually similar to leather are arranged above the underheel along its edge so as to delimit a chamber in which a core (3) of resilient plastic material is injected, said core being formed with an appendage (2) projecting from said at least one opening (7), said strips (4, 5) being connected to the underheel (1) by means of the core (3) made of resilient plastic material.

2. A heel in accordance with claim 1, wherein said core (3) incorporates an insert (11) made of light plastic material.

3. A heel in accordance with claim 2, wherein said insert (11) is provided with an opening in a position opposite said at least one opening (7) of the underheel (1).

4. A heel in accordance with any one of the preceding claims, wherein said core (3), together with a sole (6) applied to it, defines a chamber (12) in a position opposite to said at least one opening (7) of the underheel (1) within which there is present an air cushion performing an auxiliary shock-absorbing function.

5. A heel in accordance with any one of the preceding claims, wherein said underheel (1) is provided with a plurality of openings (7) from which there project respective appendages (2) of said core (3).

6. A heel in accordance with claim 5, wherein said openings (7) are arranged in a symmetrical fashion.

7. A heel in accordance with any one of the preceding claims, comprising two leather strips (4, 5) arranged, respectively, along the forward edge of said underheel and, bent in the manner of an arc along the lateral and rearward edges of said underheel.

8. A method for producing a shock-absorbing heel for footwear, **characterized in that** it comprises the following steps:
moulding an underheel (1) made of elastomeric material and having at least one opening (7);
arranging the underheel (1) within a mould having a shape equal to that of the underheel and a height substantially equal to the height of the heel that is to be produced, said mould being provided with a lowered bottom in a position corresponding to said opening;
arranging strips (4, 5) of leather, or a material visually similar to leather, above the underheel (1) to abut against the side walls of the mould;
injecting molten resilient plastic material above said underheel into a chamber delimited by said strips.

9. The method in accordance with claim 8, wherein an insert (11) is arranged in said chamber before said resilient plastic material is injected into it.

10. The method in accordance with claim 9, wherein the insert (11) is provided with an opening in a position opposite to said at least one opening (7) of the underheel.

11. The method in accordance with any one of claims 8, 9 or 10, wherein a chamber (12) suitable for containing an air cushion and delimited on its upper side by a sole (6), is formed on said core (3).

12. The method in accordance with any one of the claims 8 to 11, wherein an underheel (1) made of rubber with a plurality of openings (7) is used.

13. The method in accordance with claim 12, wherein said plurality of openings (7) is formed in a symmetrical fashion.

## Patentansprüche

1. Stoßdämpfender Absatz für Schuhwerk, enthaltend eine Absatzsohle (1) mit wenigstens einer Öffnung (7), **dadurch gekennzeichnet, dass** die Absatzsohle (1) aus elastomerem Material besteht und Streifen (4, 5), die aus Leder oder einem ähnlich zu Leder ausschauenden Material bestehen, über der Absatzsohle längs ihres Randes angeordnet sind, um eine Kammer zu begrenzen, in die ein Kern (3) aus elastischem Kunststoffmaterial eingespritzt ist, welcher Kern mit einem Fortsatz (2) ausgebildet ist, der von der wenigstens einen Öffnung (7) vorsteht, welche Streifen (4, 5) mit der Absatzsohle (1) mittels des Kerns (3), der aus elastischem Kunststoffmaterial besteht, verbunden sind.

2. Absatz nach Anspruch 1, wobei der Kern (3) einen Einsatz (11) beinhaltet, der aus leichtem Kunststoffmaterial besteht.

3. Absatz nach Anspruch 2, wobei der Einsatz (11) mit einer Öffnung in einer Position gegenüber der wenigstens einen Öffnung (7) der Absatzsohle (1) versehen ist.

4. Absatz nach einem der vorhergehenden Ansprüche, wobei der Kern (3) zusammen mit einer Sohle (6), die darauf angebracht wird, in einer Position gegenüber der wenigstens einen Öffnung (7) der Absatzsohle (1) eine Kammer (12) definiert, in welcher ein Luftkissen vorhanden ist, das eine Hilfsstoßdämpffunktion ausführt.

5. Absatz nach einem der vorhergehenden Ansprüche, wobei die Absatzsohle (1) mit einer Mehrzahl von Öffnungen (7) versehen ist, woraus entsprechende Fortsätze (2) des Kerns (3) vorstehen.

6. Absatz nach Anspruch 5, wobei die Öffnungen (7) in einer symmetrischen Weise angeordnet sind.

7. Absatz nach einem der vorhergehenden Ansprüche, enthaltend zwei Lederstreifen (4, 5) die entsprechend längs dem vorderen Rand der Absatzsohle angeordnet und in der Weise eines Bogens längs den seitlichen und hinteren Rändern der Absatzsohle gebogen sind.

8. Verfahren zum Herstellen eines stoßdämpfenden Absatzes für Schuhwerk, **dadurch gekennzeichnet, dass** es die folgenden Schritte enthält:
- Formen einer Absatzsohle (1), die aus elastomerem Material besteht und wenigstens eine Öffnung (7) hat;
- Anordnen der Absatzsohle (1) innerhalb eines Formwerkzeuges, das eine Form gleich jener der Absatzsohle und eine Höhe im Wesentlichen gleich der Höhe des Absatzes hat, der herzustellen ist, welches Formwerkzeug mit einem abgesenkten Boden in einer Position entsprechend der Öffnung versehen ist;
- Anordnen von Streifen (4, 5) aus Leder oder einem ähnlich zu Leder ausschauenden Material über der Absatzsohle (1), um gegen die Seitenwände des Formwerkzeuges anzuliegen;
- Einspritzen von geschmolzenem elastischem Kunststoffmaterial über der Absatzsohle in die Kammer, die durch die Streifen begrenzt ist.

9. Verfahren nach Anspruch 8, wobei ein Einsatz (11) in der Kammer angeordnet wird, bevor das elastische Kunststoffmaterial in sie eingespritzt wird.

10. Verfahren nach Anspruch 9, wobei der Einsatz (11) mit einer Öffnung in einer Position gegenüber der wenigstens einen Öffnung (7) der Absatzsohle versehen ist.

11. Verfahren nach einem der Ansprüche 8, 9 oder 10, wobei eine Kammer (12), die zum Beinhalten eines Luftkissens geeignet und an ihrer Oberseite durch eine Sohle (6) begrenzt ist, auf dem Kern (3) ausgebildet wird.

12. Verfahren nach einem der Ansprüche 8 bis 11, wobei eine Absatzsohle (1), die aus Gummi mit einer Mehrzahl von Öffnungen (7) besteht, verwendet wird.

13. Verfahren nach Anspruch 12, wobei die Mehrzahl von Öffnungen (7) in einer symmetrischen Weise ausgebildet ist.

## Revendications

1. Un talon amortisseur pour article chaussant comprenant un sous talon (1) avec au moins une ouverture (7), **caractérisé en ce que** le sous talon (1) est réalisé en un matériau élastomère et que des bandes (4, 5) en cuir ou un autre matériau visuellement similaire au cuir sont agencées au-dessus du sous talon le long de son bord afin de délimiter une chambre dans laquelle est injecté un noyau (3) en matière plastique résiliente, ledit noyau étant formé d'un appendice (2) faisant saillir à partir de ladite au moins une ouverture (7), lesdites bandes (4, 5) étant reliées au sous talon (1) au moyen du noyau (3) réalisé en matière plastique résiliente.

2. Un talon selon la revendication 1, où ledit noyau (3) contient un insert (11) réalisé en une matière plastique légère.

3. Un talon selon la revendication 2, où ledit insert (11) est muni d'une ouverture dans une position opposée à ladite au moins une ouverture (7) du sous talon (1).

4. Un talon selon l'une quelconque des revendications précédentes, où ledit noyau (3), ensemble avec une semelle (6) appliquée sur lui, définit une chambre (12) dans une position opposée à ladite au moins une ouverture (7) du sous talon (1) dans laquelle est présent un coussin d'air remplissant une fonction amortissante auxiliaire.

5. Un talon selon l'une quelconque des revendications précédentes, où ledit sous talon (1) est muni d'une pluralité d'ouvertures (7) à partir desquelles font saillie des appendices respectif (2) du dit noyau (3).

6. Un talon selon la revendication 5, où lesdites ouvertures (7) sont agencées de façon symétrique.

7. Un talon selon l'une quelconque des revendications précédentes, comprenant deux bandes de cuir (4, 5) agencées, respectivement, le long du bord avant du dit sous talon et, pliées à la manière d'un arc le long des bords latéral et arrière du dit sous talon.

8. Un procédé pour la production d'un talon amortisseur pour article chaussant, **caractérisé en ce qu'**il comprend les étapes suivantes :
moulage d'un sous talon (1) en un matériau élastomère et ayant au moins une ouverture (7) ;
mise en place du sous talon (1) dans un moule ayant une forme identique à celle du sous talon et d'une hauteur sensiblement égale à la hauteur du talon qui doit être produit, ledit moule étant muni d'un fond en creux dans une position correspondant à ladite ouverture ;
mise en place de bandes en cuir (4, 5), ou en un matériau visuellement similaire au cuir, au-dessus du sous talon (1) et au contact des parois latérales du moule ;
injection d'une matière plastique résiliente fondue au-dessus du dit sous talon dans une chambre délimitée par lesdites bandes.

9. Le procédé selon la revendication 8, où un insert (11) est disposé dans ladite chambre avant que ladite matière plastique résiliente y soit injectée.

10. Le procédé selon la revendication 9, où l'insert (11) est muni d'une ouverture dans une position opposée à ladite au moins une ouverture (7) du sous talon.

11. Le procédé selon l'une quelconque de revendications 8, 9 ou 10, où une chambre (12) appropriée pour contenir un coussin d'air et délimitée sur son côté supérieur par une semelle (6), est formée sur ledit noyau (3).

12. Le procédé selon l'une quelconque des revendications 8 à 11, où est utilisé un sous talon (1) en caoutchouc avec une pluralité d'ouvertures (7).

13. Le procédé selon la revendication 12, où ladite pluralité d'ouvertures (7) est réalisée de façon symétrique.
